# EUROPÄISCHE PATENTSCHRIFT

(11) **EP 3 457 001 B1**
(45) Veröffentlichungstag und Bekanntmachung des Hinweises auf die Patenterteilung: **09.12.2020**
(21) Anmeldenummer: 17191109.2
(22) Anmeldetag: 14.09.2017
(51) Int. Cl.: F16H 63/30, F16H 55/17, F16H 63/38

(54) **SCHALTEINRICHTUNG FÜR EIN GETRIEBE**
SWITCHING DEVICE FOR GEARBOX
DISPOSITIF DE CHANGEMENT DE VITESSE POUR UNE BOÎTE DE VITESSES

(43) Veröffentlichungstag der Anmeldung: 20.03.2019
(73) Patentinhaber: ZF Friedrichshafen AG, 88046 Friedrichshafen (DE)
(72) Erfinder: Retsch, Matthias, 14776 Brandenburg (DE)
(74) Vertreter: ZF Friedrichshafen AG

(56) Entgegenhaltungen:
- EP-A2- 2 762 757
- DE-A1-102013 106 846
- DE-A1-102013 108 736
- US-A1- 2012 240 701

## Beschreibung

Die Erfindung betrifft eine Schalteinrichtung für ein Getriebe, insbesondere für ein Kraftfahrzeuggetriebe. Die Erfindung betrifft ferner ein Getriebe mit einer solchen Schalteinrichtung.

Die DE 10 2008 000 647 A1 der Anmelderin beschreibt eine Anordnung zum Schalten von zumindest einem Losrad an einer zugeordneten Welle eines Getriebes. Mit der darin offenbarten Schalteinrichtung kann das Losrad entweder mit der zugeordneten Welle oder mit einem weiteren Losrad gekoppelt werden. Eines der Ausführungsbeispiele zeigt eine Schalteinrichtung mit Synchronisierung, wobei eine Schiebemuffe der Schalteinrichtung über Mitnahmeelemente mit dem Losrad verbunden ist. Die Mitnahmeelemente sind mit der Schiebemuffe drehfest verbunden, und greifen formschlüssig in entsprechende Öffnungen des Losrades ein.

Eine derartige Ausgestaltung ist für die Fertigung der Schiebemuffe jedoch nachteilig, da aufgrund der Mitnahmeelemente eine Innenverzahnung der Schiebemuffe nur mit erhöhtem Aufwand herstellbar ist.

Die US 2012/240701 A1 beschreibt ein Getriebe für ein Motorrad, mit mehreren Eingangszahnrädern auf einer Eingangswelle und mehreren Ausgangszahnrädern auf einer Ausgangswelle. Zum Einlegen der Gänge sind Schieberinge vorgesehen, wobei jedes der Schieberinge Löcher aufweist. An den Eingangs- oder an den Ausgangszahnrädern sind Fortsätze angeordnet, welche in diese Löcher eingreifen.

Die DE 10 2013 106 846 A1 beschreibt eine Synchronisiereinrichtung für ein Getriebe, aufweisend eine Muffe, die um eine mit einer Getriebewelle gekuppelten Nabe herum drehbar vorgesehen ist. Die Muffe ist in einer Axialrichtung der Getriebewelle bewegbar. An einem Innenumfang der Muffe ist eine Schaltverzahnung vorgesehen.

Die DE 10 2013 108 736 A1 beschreibt eine Klauenschaltung für ein Fahrzeuggetriebe. An einem Gangrad des Fahrzeuggetriebes ist ein Kupplungskörper befestigt. Der Kupplungskörper ist zusammen mit dem Gangrad drehbar und axial unverschieblich auf einer Getriebewelle gelagert. Eine Nabe ist auf der Getriebewelle drehfest und axial verschieblich gelagert. Ferner ist ein axial verschiebliches Schaltelement vorgesehen, das in axialer Richtung mit der Nabe verbunden und axial verspannt ist sowie in Umfangsrichtung mit der Nabe eine Reibverbindung ausbildet. Die EP 2 762 757 A2 beschreibt eine Klauenkupplungssteuerung für ein automatisiertes Getriebe. Die Klauenverzahnung erstreckt sich dabei in axialer Richtung des Gangzahnrads.

Es ist daher Aufgabe der Erfindung die im Stand der Technik bekannte Schaltanordnung weiterzuentwickeln.

Die Aufgabe wird gelöst durch die Merkmale des Patentanspruchs 1. Vorteilhafte Ausgestaltungen ergeben sich aus den Unteransprüchen.

Es wird eine Schalteinrichtung für ein Getriebe vorgeschlagen, welche zum Herstellen von zwei schaltbaren drehfesten Verbindungen eingerichtet ist, nämlich zwischen einer Welle des Getriebes und einem der Welle zugeordneten ersten Losrad, und zwischen dem ersten Losrad und einem zweiten Losrad. Das zweite Losrad koaxial zur selben Welle angeordnet.

Dazu weist die Schalteinrichtung eine zwischen dem ersten und zweiten Losrad angeordnete Schiebemuffe auf. Durch Verschiebung der Schiebemuffe in Richtung des ersten Losrades wird die drehfeste Verbindung zwischen der Welle und dem ersten Losrad hergestellt, beispielsweise über eine Klauenverzahnung. Durch Verschiebung der Schiebemuffe in Richtung des zweiten Losrades wird die drehfeste Verbindung zwischen dem ersten Losrad und dem zweiten Losrad hergestellt. Erfindungsgemäß weist das erste Losrad eine Mehrzahl von axial vorstehenden Fortsätzen auf, welche durch in der Schiebemuffe ausgebildete Öffnungen hindurchreichen. Dadurch sind die Schiebemuffe und das erste Losrad in Drehrichtung formschlüssig verbunden. Die axial vorstehenden Fortsätze behindern die Fertigung der Außenverzahnung des Losrades nicht.

Die Öffnungen sind vorzugsweise als Durchgangslöcher oder als Freistellungen gebildet. Ein Durchgangsloch weist im Unterschied zu einer Freistellung einen geschlossenen Querschnitt auf. Mittels beider Ausführungsformen kann ein Formschluss zwischen Schiebemuffe und erstem Losrad gebildet werden.

Vorzugsweise weisen die Fortsätze einen kreisrunden Querschnitt auf. In anderen Worten sind die Fortsätze als Zylinder ausgebildet, als Vollzylinder oder als Hohlzylinder. Alternativ dazu können die die Fortsätze als vom ersten Losrad axial hervorstehende Ringsegmente ausgebildet sein.

Gemäß einer bevorzugten Ausgestaltung sind die Fortsätze und das erste Losrad einteilig ausgeführt. In anderen Worten werden die Fortsätze und das erste Losrad aus einem gemeinsamen Rohteil bearbeitet, sodass die Fortsätze und das erste Losrad nicht gefügt werden müssen. Dadurch ist eine besonders kompakte Bauweise möglich, da auf Fügestellen verzichtet werden kann. Alternativ dazu kann eine mehrteilige Konstruktion gewählt werden, sodass die Fortsätze beispielsweise über eine Pressverbindung oder eine Schweißverbindung mit dem ersten Losrad verbunden sind. Je nach Ausführung kann eine solche mehrteilige Konstruktion den Herstellungsaufwand verringern.

Vorzugsweise weist die Schalteinrichtung eine Neutralstellung auf, in der weder zwischen der Welle und dem ersten Losrad noch zwischen den beiden Losrädern eine drehfeste Verbindung besteht. Dies ist besonders für die Anwendung in einem Kraftfahrzeuggetriebe mit mehreren Gängen vorteilhaft.

Vorzugsweise ist zumindest einem der Losräder eine Synchronisiereinrichtung zugeordnet. Mittels der Synchronisiereinrichtung erfolgt die Herstellung der jeweiligen drehfesten Verbindung erst bei Synchrondrehzahl der beteiligten Bauelemente. Alternativ dazu ist zumindest eine der schaltbaren drehfesten Verbindungen über eine unsynchronisierte Klauenverzahnung herstellbar.

Gemäß einer bevorzugten Ausgestaltung weist die Schalteinrichtung einen Druckstückhalter auf. Der Druckstückhalter ist dazu eingerichtet ein federbelastetes Druckstück abzustützen, beispielsweise eine Kugel. Mittels des Druckstücks kann die Schiebemuffe in zumindest einer axialen Stellung rastiert werden, in dem das Druckstück in eine entsprechende Ausnehmung in der Schiebemuffe eingreift. Der Druckstückhalter kann an einer Innenseite der Fortsätze zentriert sein. Dazu ist der Druckstückhalter mit der Schiebemuffe vorzugsweise drehfest verbunden. Alternativ zur Zentrierung an der Innenseite der Fortsätze kann der Druckstückhalter am ersten oder zweiten Losrad über ein Lager zentriert sein, vorzugsweise über ein Lager. Gemäß einer weiteren möglichen Alternative kann der Druckstückhalter an der Welle zentriert sein.

Die erfindungsgemäße Schalteinrichtung kann Bestandteil eines Getriebes für ein Kraftfahrzeuggetriebe sein. Ein Getriebe bezeichnet hier insbesondere ein mehrgängiges Getriebe, bei dem eine Vielzahl von Gängen, also feste Übersetzungsverhältnisse zwischen einer Antriebswelle und einer Abtriebswelle des Getriebes schaltbar sind. Die Schalteinrichtung dient bevorzugt zur Herstellung zwei solcher Gänge. Da mittels der Schalteinrichtung zwei Losräder miteinander drehfest koppelbar sind, eignet sich die Schalteinrichtung besonders für die Herstellung eines Windungsganges.

Ausführungsbeispiele der Erfindung sind nachfolgend anhand der beigefügten Figuren detailliert beschrieben. Es zeigen:
- Fig. 1: eine Schnittansicht einer erfindungsgemäßen Schalteinrichtung mit Synchronisierung;
- Fig. 2: eine isometrische Ansicht eines Losrades der Schalteinrichtung ;
- Fig. 3: eine isometrische Ansicht einer Schiebemuffe der Schalteinrichtung;
- Fig. 4: eine Schnittansicht einer erfindungsgemäßen Schalteinrichtung ohne Synchronisierung;
- Fig. 5: eine isometrische Ansicht eines Losrades der Schalteinrichtung ohne Synchronisierung;
- Fig. 6: eine isometrische Ansicht einer Schiebemuffe der Schalteinrichtung ohne Synchronisierung;
- Fig. 7: eine Schnittansicht eines Teils der erfindungsgemäßen Schalteinrichtung ohne Synchronisierung;
- Fig. 8: eine isometrische Ansicht eines Losrades gemäß Fig. 7;
- Fig. 9: eine isometrische Ansicht einer Schiebemuffe gemäß Fig. 7;
- Fig. 10 bis Fig. 12: je eine Prinzipskizze von verschiedenen Lagerungen eines Druckstückhalters der erfindungsgemäßen Schalteinrichtung; und
- Fig. 13: schematisch einen Antriebsstrang eines Kraftfahrzeugs.

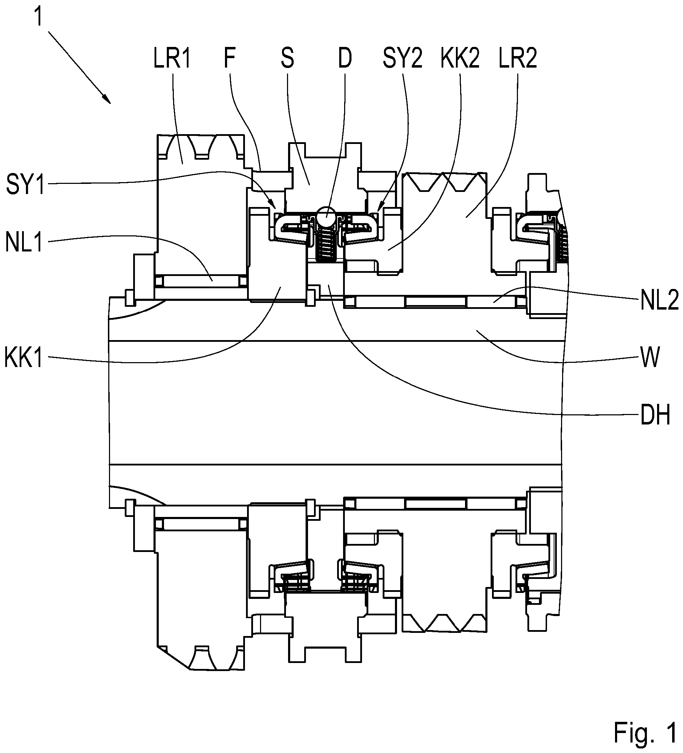

Fig. 1 zeigt eine Schnittansicht eines ersten Ausführungsbeispiels einer erfindungsgemäßen Schalteinrichtung 1. Die Schalteinrichtung 1 ist zum Herstellen einer schaltbaren drehfesten Verbindung zwischen einer Welle W und eines ersten Losrades LR1 eingerichtet, welches auf der Welle W über ein erstes Nadellager NL1 drehbar gelagert ist. Die Schalteinrichtung 1 ist ferner zum Herstellen einer schaltbaren drehfesten Verbindung zwischen dem ersten Losrad LR1 und einem zweiten Losrad LR2 eingerichtet, welches koaxial zur Welle W angeordnet und auf der Welle W über ein zweites Nadellager NL2 drehbar gelagert ist. Das zweite Nadellager NL2 ist beispielhaft als ein zweireihiges Lager ausgebildet.

Zwischen dem ersten und zweiten Losrad LR1, LR2 ist eine Schiebemuffe S angeordnet. Die Schiebemuffe S weist an ihrem Außenumfang eine umlaufende Nut auf, in die ein nicht dargestellter Aktuator formschlüssig eingreifen kann, beispielsweise eine Schaltgabel. Die in Fig. 1 dargestellte Ausgestaltung der formschlüssigen Schnittstelle zwischen Schaltgabel und Schiebemuffe S ist nur beispielhaft anzusehen. Wird die Schiebemuffe S durch den Aktuator in Richtung des ersten Losrades LR1 axial verschoben, so wird die drehfeste Verbindung zwischen der Welle W und dem ersten Losrad LR1 hergestellt. Dazu ist ein Kupplungskörper KK1 mit der Welle W drehfest verbunden. Der Kupplungskörper KK1 weist eine Schräge auf, welche mit einer Synchronisiereinrichtung SY1 zusammenwirkt. Die Synchronisiereinrichtung SY1 ist in bekannter Weise dazu eingerichtet, das Herstellen der drehfesten Verbindung zwischen Welle W und erstem Losrad LR1 erst dann zuzulassen, wenn Welle W und erstes Losrad LR1 die gleiche Drehzahl aufweisen.

Die Schiebemuffe S ist mit dem ersten Losrad LR1 formschlüssig verbunden, indem am ersten Losrad LR1 axial vorstehende Fortsätze F ausgebildet sind. Die Fortsätze F greifen in Ausnehmungen A der Schiebemuffe S ein, welche in der dargestellten Schnittansicht nicht sichtbar sind. Wird nun die Schiebemuffe S in Richtung des zweiten Losrades LR2 verschoben, so wird die drehfeste Verbindung zwischen den beiden Losrädern LR1, LR2 hergestellt. Diese drehfeste Verbindung wird über die Fortsätze F, die mit den Fortsätzen F verbundene Schiebemuffe S sowie über einen Kupplungskörper KK2 hergestellt. Der Kupplungskörper KK2 ist mit dem zweiten Losrad LR2 drehfest verbunden und weist eine Schräge auf, welche mit einer Synchronisiereinrichtung SY2 zusammenwirkt. Die Synchronisiereinrichtung SY2 ist in bekannter Weise dazu eingerichtet, das Herstellen der drehfesten Verbindung zwischen der Schiebemuffe S und dem Kupplungskörper KK2 erst dann zuzulassen, wenn die beiden Losräder LR1, LR2 die gleiche Drehzahl aufweisen.

In einer Mittelstellung der Schiebemuffe S ist das erste Losrad LR1 weder mit der Welle W noch mit dem zweiten Losrad LR2 drehfest verbunden. Diese Mittelstellung der Schiebemuffe S entspricht einer Neutralstellung der Schalteinrichtung 1. Es sind auch andere Ausführungen denkbar, bei denen die Neutralstellung nicht einer Mittelstellung der Schiebemuffe, sondern einer aus der Mitte ausgerückten Stellung entspricht. Beispielsweise könnte in der Mittelstellung das erste Losrad mit der Welle gekoppelt sein. Bei einer Verschiebung der Schiebemuffe in eine erste Richtung könnte die Neutralstellung der Schalteinrichtung vorliegen. Bei einer Verschiebung in eine der ersten Richtung entgegengesetzten zweiten Richtung könnte die Koppelung der beiden Losräder erfolgen. Der Übersichtlichkeit halber sind derartige Ausführungen nicht in den Figuren dargestellt.

Die Schalteinrichtung 1 weist einen Druckstückhalter DH auf, welcher über eine Verzahnung mit der Welle W drehfest verbunden ist. Der Druckstückhalter DH ist an seinem Außenumfang dazu eingerichtet ein federbelastetes Druckstück D abzustützen. Über das Druckstück D kann die Schiebemuffe S zumindest in ihrer Mittelstellung verrastet werden.

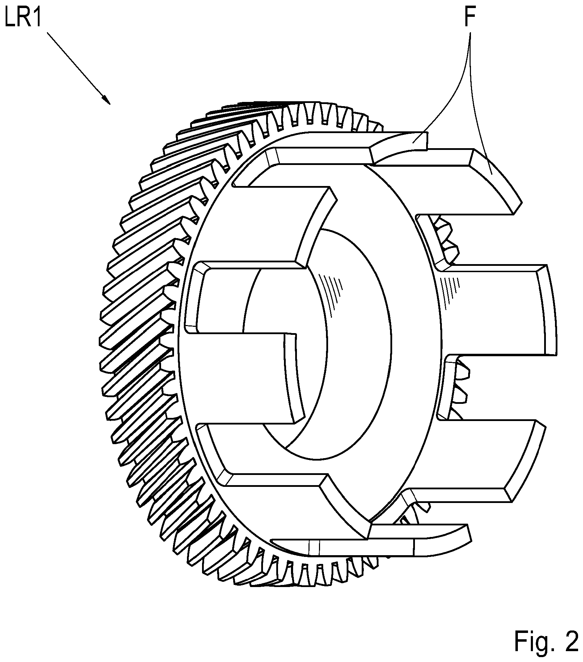

Fig. 2 zeigt eine isometrische Ansicht des ersten Losrades LR1 der Schalteinrichtung 1 gemäß Fig. 1. Darin ist deutlich zu erkennen, dass die Fortsätze F durch vom ersten Losrad LR1 hervorstehende Ringsegmente gebildet sind. Die Fortsätze F und das Losrad LR1 bilden eine einteilige Konstruktion.

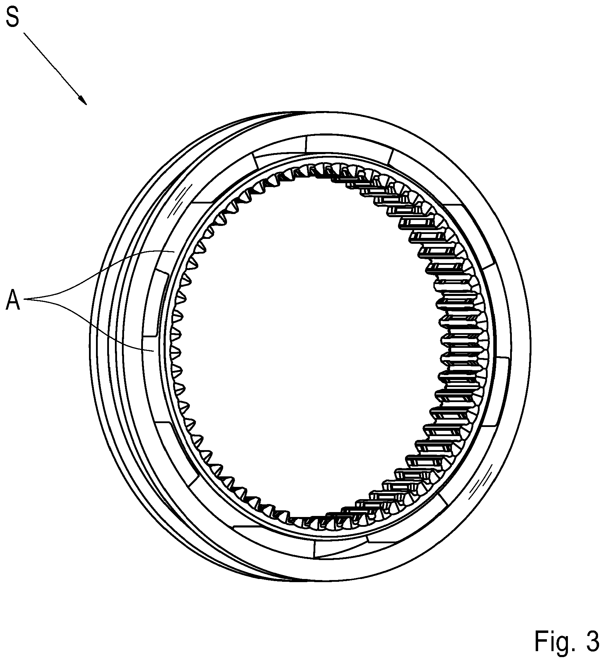

Fig. 3 zeigt eine isometrische Ansicht der Schiebemuffe S der Schalteinrichtung 1 gemäß Fig. 1. Darin sind die in der Schiebemuffe S ausgebildeten Öffnungen A deutlich zu erkennen, welche in der vorliegenden Konstruktion als Durchgangslöcher ausgebildet sind. Die Öffnungen A sind derart dimensioniert, dass ein axiales Verschieben der Schiebemuffe S relativ zum ersten Losrad LR1 möglich ist, axial geführt durch die Fortsätze F.

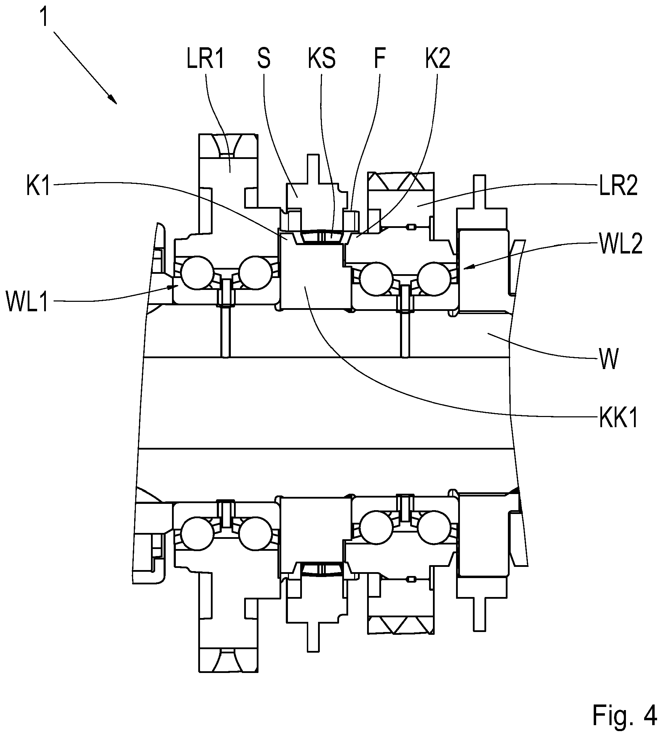

Fig. 4 zeigt eine Schnittansicht eines zweiten Ausführungsbeispiels der erfindungsgemäßen Schalteinrichtung 1. Im Unterschied zum Ausführungsbeispiel gemäß Fig. 1 ist nun keine Synchronisiereinrichtung vorgesehen. Am Außenumfang des mit der Welle W drehfest verbundenen Kupplungskörpers KK1 ist eine Klauenverzahnung K1 ausgebildet. Am Innendurchmesser der Schiebemuffe S ist eine dazu komplementäre Klauenverzahnung KS ausgebildet. Wird die Schiebemuffe S durch einen nicht dargestellten Aktuator in Richtung des ersten Losrades LR1 verschoben, so wird über die Klauenverzahnungen K1 und KS eine formschlüssige drehfeste Verbindung zwischen dem Kupplungskörper KK1 und dem ersten Losrad LR1 hergestellt. Da der Kupplungskörper KK1 mit der Welle W drehfest verbunden ist, und die Schiebemuffe S über die Fortsätze F mit dem ersten Losrad LR1 verbunden ist, wird somit eine drehfeste Verbindung zwischen dem ersten Losrad LR1 und der Welle W hergestellt.

Am zweiten Losrad LR2 ist eine zur Klauenverzahnung KS der Schaltmuffe S komplementäre Klauenverzahnung K2 ausgebildet. Wird die Schiebemuffe S ausgehend von ihrer Neutralstellung in Richtung des zweiten Losrades LR2 verschoben, so wird über die Klauenverzahnungen KS und K2 eine formschlüssige drehfeste Verbindung zwischen der Schiebemuffe S und dem zweiten Losrad LR2 hergestellt. Da die Schiebemuffe S über die Fortsätze F mit dem ersten Losrad LR1 verbunden ist, wird somit eine drehfeste Verbindung zwischen den beiden Losrädern LR1, LR2 hergestellt. In dieser Stellung ist die Klauenverzahnung K1 nicht mit der Klauenverzahnung KS im Eingriff.

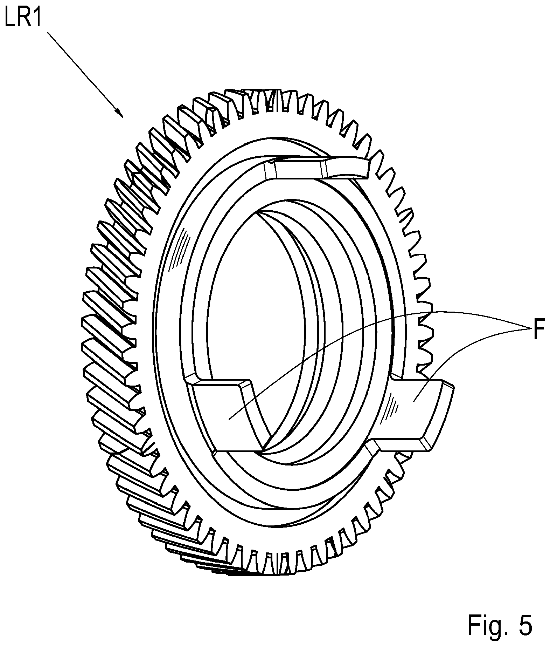

Fig. 5 zeigt eine isometrische Ansicht des ersten Losrades LR1 der Schalteinrichtung 1 gemäß Fig. 4. Darin ist deutlich zu erkennen, dass die Fortsätze F durch drei vom ersten Losrad LR1 hervorstehende Ringsegmente gebildet sind. Die Fortsätze F und das Losrad LR1 bilden eine einteilige Konstruktion.

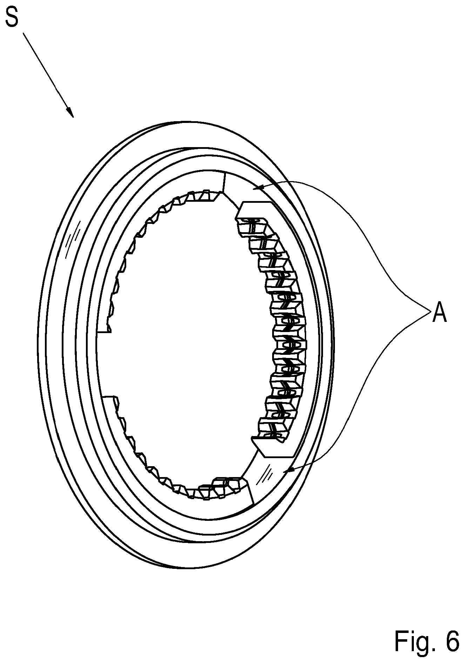

Fig. 6 zeigt eine isometrische Ansicht des Schiebemuffe S der Schalteinrichtung 1 gemäß Fig. 4. Darin sind die in der Schiebemuffe S ausgebildeten Öffnungen A deutlich zu erkennen, welche in der vorliegenden Konstruktion als Freistellungen in der Mitnahmeverzahnung der Schiebemuffe S ausgebildet sind. Die Öffnungen A sind derart dimensioniert, dass ein axiales Verschieben der Schiebemuffe S relativ zum ersten Losrad LR1 möglich ist, axial geführt durch die Fortsätze F.

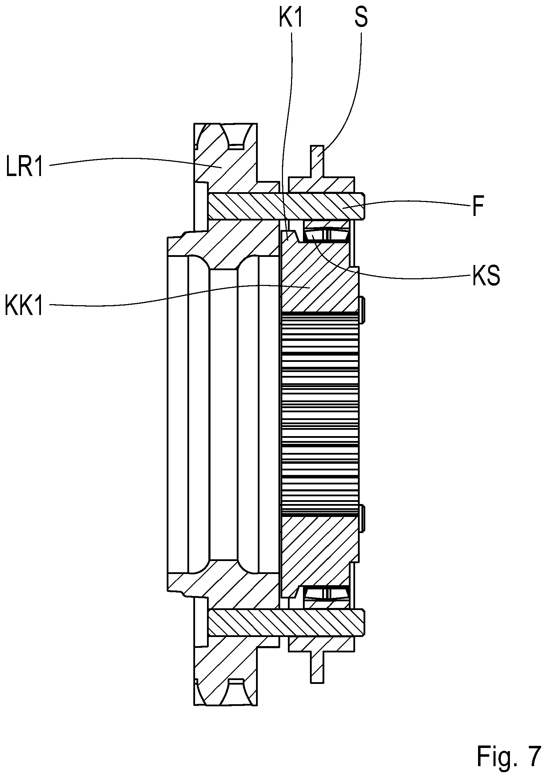

Fig. 7 zeigt eine Schnittansicht gemäß einer Variante der in Fig.7 dargestellten Konstruktion. Die Fortsätze F sind nun als zylindrische Stifte mit kreisrundem Querschnitt ausgebildet, welche mittels einer Pressverbindung mit dem ersten Losrad LR1 verbunden sind. Alternativ dazu können die Fortsätze F mit dem ersten Losrad LR1 verschweißt werden. Die entsprechende Schweißnaht könnte in der Ausnehmung auf jener Stirnseite des ersten Losrades LR1 angeordnet sein, welche dem Kupplungskörper KK1 gegenüberliegt.

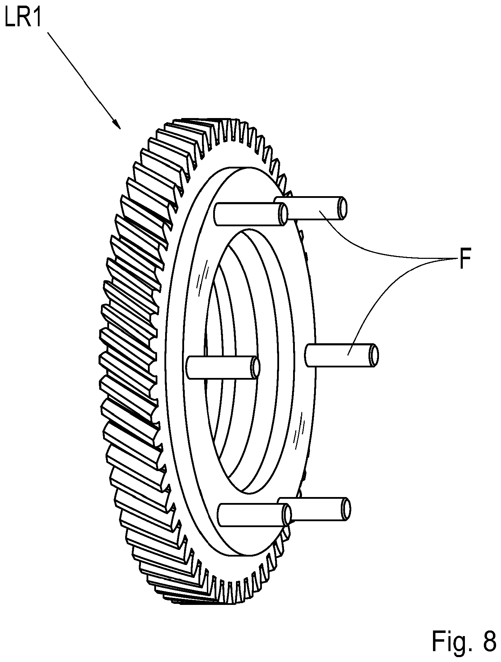

Fig. 8 zeigt eine isometrische Ansicht des ersten Losrades LR1 gemäß der in Fig. 7 dargestellten Konstruktion. Darin ist deutlich zu erkennen, dass die Fortsätze F durch sechs vom ersten Losrad LR1 hervorstehende Stifte mit kreisrundem Querschnitt gebildet sind.

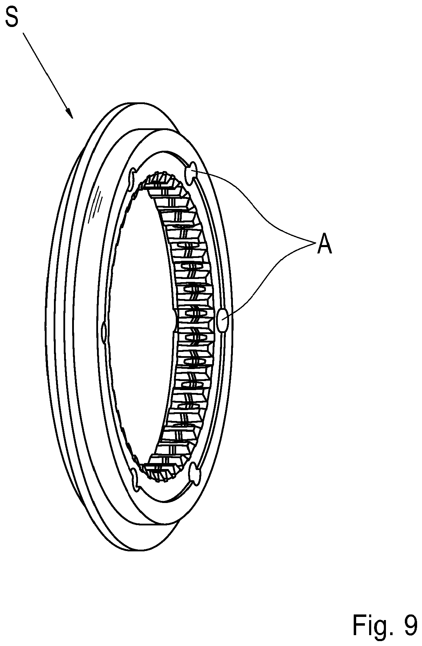

Fig. 9 zeigt eine isometrische Ansicht des Schiebemuffe S gemäß der in Fig. 7 dargestellten Konstruktion. Darin sind die in der Schiebemuffe S ausgebildeten Öffnungen A deutlich zu erkennen, welche in der vorliegenden Konstruktion als Bohrungen ausgeführt sind. Die Öffnungen A sind derart dimensioniert, dass ein axiales Verschieben der Schiebemuffe S relativ zum ersten Losrad LR1 möglich ist, axial geführt durch die Fortsätze F.

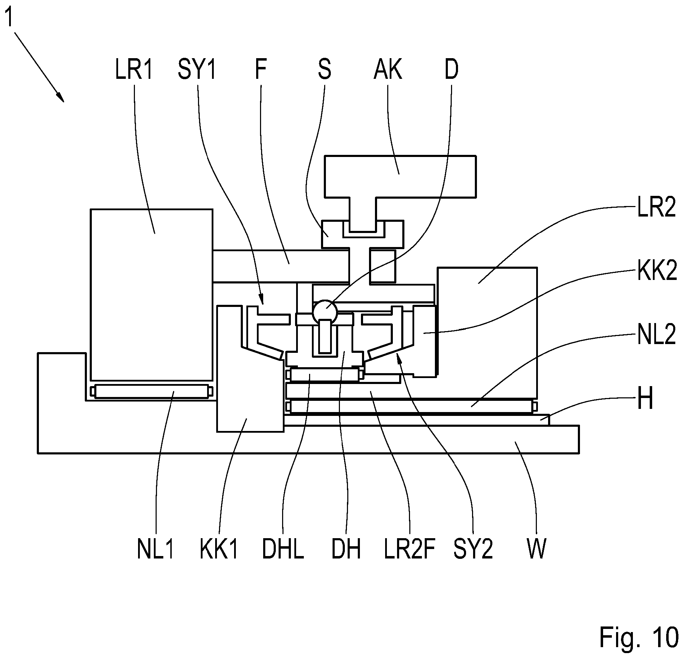

Fig. 10 zeigt eine Prinzipskizze eines dritten Ausführungsbeispiels der Schalteinrichtung 1 mit Synchronisiereinrichtungen SY1, SY2. Im Unterschied zum in Fig.1 dargestellten ersten Ausführungsbeispiel weist die Schalteinrichtung 1 eine optionale Hülse H auf, welche zwischen der Welle W und dem zweiten Nadellager NL2 angeordnet ist. Das zweite Losrad LR2 weist einen axial in Richtung des ersten Losrades LR1 hervorstehenden Fortsatz LR2F auf. Der Kupplungskörper KK2 ist über den Fortsatz LR2F drehfest mit dem Losrad LR2 verbunden. Zusätzlich dient der Fortsatz LR2F der Lagerung des Druckstückhalters DH, welcher über ein Nadellager DHL am Fortsatz LR2F drehbar gelagert und zentriert ist.

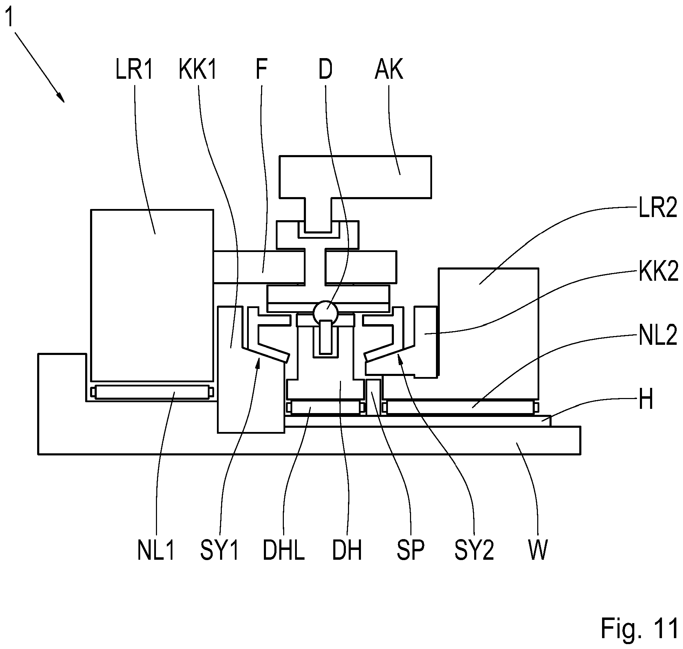

Fig. 11 zeigt eine Prinzipskizze eines vierten Ausführungsbeispiels der Schalteinrichtung 1 mit Synchronisiereinrichtungen SY1, SY2. Im Unterschied zum in Fig.10 dargestellten dritten Ausführungsbeispiel ist der Druckstückhalter DH nicht am zweiten Losrad LR2, sondern an der Welle W drehbar gelagert. Das entsprechende Nadellager DHL stützt sich an der Hülse H ab. Die Hülse H ist nur optional vorgesehen. Druckstückhalter DH und zweites Losrad LR2 sind axial durch ein Distanzstück SP voneinander getrennt. Das Distanzstück SP kann beispielsweise als Anlaufscheibe ausgebildet sein.

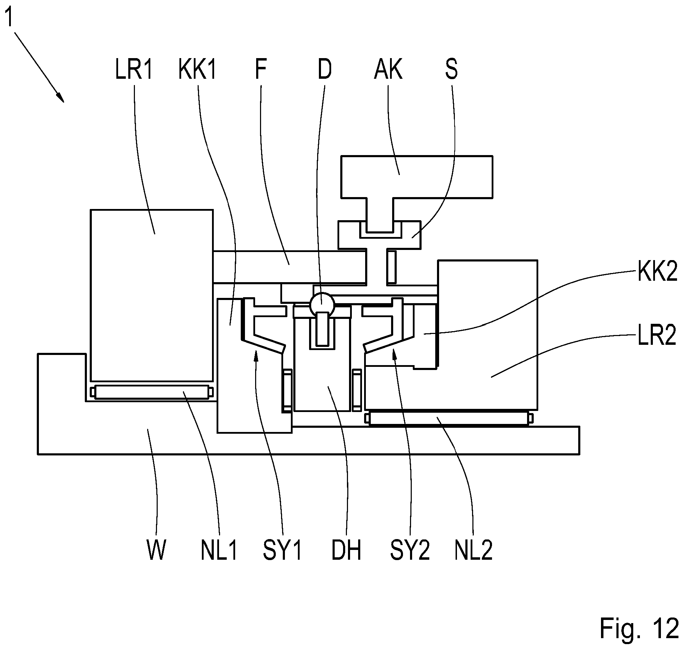

Fig. 12 zeigt eine Prinzipskizze eines fünften Ausführungsbeispiels der Schalteinrichtung 1 mit Synchronisiereinrichtungen SY1, SY2. Im Unterschied zum in Fig. 10 dargestellten dritten Ausführungsbeispiel ist der Druckstückhalter DH an seinem Außenumfang an einer Innenseite der Fortsätze F des ersten Losrades LR1 zentriert. Dabei ist der Druckstückhalter DH mit den Fortsätzen F drehfest verbunden.

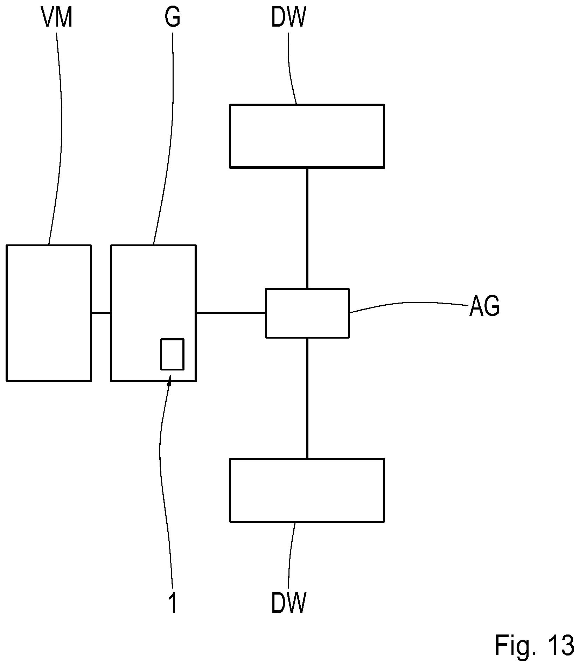

Fig. 13 zeigt schematisch einen Antriebsstrang eines Kraftfahrzeugs. Der Antriebsstrang weist einen Verbrennungsmotor VM auf, an den ein Getriebe G angeschlossen ist. Das Getriebe G ist vorzugsweise ein mehrgängiges Getriebe, bei dem eine Vielzahl von Gängen, also feste Übersetzungsverhältnisse zwischen einer Antriebswelle und einer Abtriebswelle des Getriebes G vorzugsweise automatisch schaltbar sind. Durch ein solches Getriebe G kann die Drehzahl- und Drehmomentabgabecharakteristik des Verbrennungsmotors VM den Fahrwiderständen des Fahrzeugs in geeigneter Weise angepasst werden. Das Getriebe G ist abtriebsseitig mit einem Differentialgetriebe AG verbunden, über das die am Getriebe G abtriebsseitig anliegende Leistung auf Antriebsräder DW des Kraftfahrzeugs verteilt werden kann.

Das Getriebe G weist eine Schalteinrichtung 1 nach einem der zuvor beschriebenen Ausführungsbeispiele auf, wobei die Schalteinrichtung 1 vorzugsweise an der Herstellung von zwei Gängen des Getriebes G eingerichtet ist. Das Getriebe G kann beispielsweise ein automatisiertes Getriebe sein, beispielsweise ein Doppelkupplungsgetriebe. Das Getriebe G kann alternativ dazu ein manuell geschaltetes Getriebe sein.

Die Schalteinrichtung 1 könnte auch zur Koppelung einer Welle eines ersten Getriebes mit einer Welle eines zweiten Getriebes verwendet werden. Erstes und zweites Getriebe können Sub-Getriebe eines Gesamtgetriebes sein. Beispielsweise könnte die Schalteinrichtung zur Koppelung eines Vor- oder Nachschaltradsatzes mit einem Hauptgetriebe verwendet werden. Derartige Gruppengetriebe kommen beispielsweise in Nutzfahrzeugen zum Einsatz.

Der in Fig. 13 dargestellte Aufbau des Antriebsstrangs ist lediglich beispielhaft anzusehen. Statt dem dargestellten Aufbau mit längs zur Fahrtrichtung des Kraftfahrzeugs ausgerichtetem Antriebsstrang ist auch eine Verwendung in einem quer zur Fahrtrichtung ausgerichtetem Antriebsstrang denkbar. Das Differentialgetriebe AG kann in das Getriebe G integriert sein.

### Bezugszeichen

- 1: Schalteinrichtung
- G: Getriebe
- W: Welle
- LR1: Erstes Losrad
- F: Fortsätze
- NL1: Erstes Nadellager
- LR2: Zweites Losrad
- NL2: Zweites Nadellager
- LR2F: Fortsatz
- S: Schiebemuffe
- A: Öffnungen
- SY1, SY2: Synchronisiereinrichtung
- K1, K2, KS: Klauenverzahnung
- KK1, KK2: Kupplungskörper
- DH: Druckstückhalter
- D: Druckstück
- DHL: Nadellager
- H: Hülse
- SP: Distanzstück
- AK: Aktuator
- VM: Verbrennungsmotor
- AG: Differentialgetriebe
- DW: Antriebsrad

## Patentansprüche

1. Schalteinrichtung (1) für ein Getriebe (G), wobei die Schalteinrichtung (1) eine Welle (W) sowie ein der Welle (W) zugeordnetes erstes und zweites Losrad (LR1, LR2) aufweist,
- wobei die Schalteinrichtung (1) zum Herstellen einer schaltbaren drehfesten Verbindung zwischen
- der Welle (W) und dem ersten Losrad (LR1),
- sowie zwischen dem ersten Losrad (LR1) und dem koaxial zur Welle (W) angeordneten zweiten Losrad (LR2) eingerichtet ist,
- wobei die Schalteinrichtung (1) eine zwischen dem ersten und zweiten Losrad (LR1, LR2) angeordnete Schiebemuffe (S) aufweist,
- wobei durch Verschiebung der Schiebemuffe (S) in Richtung des ersten Losrades (LR1) die drehfeste Verbindung zwischen der Welle (W) und dem ersten Losrad (LR1) herstellbar ist,
- wobei durch Verschiebung der Schiebemuffe (S) in Richtung des zweiten Losrades (LR2) die drehfeste Verbindung zwischen dem ersten Losrad (LR1) und dem zweiten Losrad (LR2) herstellbar ist,
**dadurch gekennzeichnet, dass** das erste Losrad (LR1) eine Mehrzahl von axial vorstehenden Fortsätzen (F) aufweist, welche durch in der Schiebemuffe (S) ausgebildete Öffnungen (A) hindurchreichen.

2. Schalteinrichtung (1) nach Anspruch 1, **dadurch gekennzeichnet, dass** die Öffnungen (A) durch Durchgangslöcher oder durch Freistellungen gebildet werden.

3. Schalteinrichtung (1) nach Anspruch 1 oder Anspruch 2, **dadurch gekennzeichnet, dass** die Fortsätze (F) einen kreisrunden Querschnitt aufweisen.

4. Schalteinrichtung (1) nach Anspruch 1 oder Anspruch 2, **dadurch gekennzeichnet, dass** die Fortsätze (F) durch vom ersten Losrad (LR1) hervorstehende Ringsegmente gebildet sind.

5. Schalteinrichtung (1) nach einem der vorangehenden Ansprüche, **dadurch gekennzeichnet, dass** die Fortsätze (F) und das erste Losrad (LR1) einteilig ausgeführt sind.

6. Schalteinrichtung (1) nach einem der Ansprüche 1 bis 4, **dadurch gekennzeichnet, dass** die Fortsätze (F) über eine Pressverbindung oder eine Schweißverbindung mit dem ersten Losrad (LR1) verbunden sind.

7. Schalteinrichtung (1) nach einem der vorangehenden Ansprüche, **dadurch gekennzeichnet, dass** die Schalteinrichtung (1) eine Neutralstellung aufweist, in der weder zwischen der Welle (W) und dem ersten Losrad (LR1) noch zwischen den beiden Losrädern (LR1, LR2) eine drehfeste Verbindung besteht.

8. Schalteinrichtung (1) nach einem der Ansprüche 1 bis 7, **dadurch gekennzeichnet, dass** zumindest einem der Losräder (LR1, LR2) eine Synchronisiereinrichtung (SY1, SY2) zugeordnet ist.

9. Schalteinrichtung (1) nach einem der Ansprüche 1 bis 7, **dadurch gekennzeichnet, dass** zumindest eine der schaltbaren drehfeste Verbindungen über eine Klauenverzahnung (K1, K2, KS) herstellbar ist.

10. Schalteinrichtung (1) nach einem der vorangehenden Ansprüchen, **dadurch gekennzeichnet, dass** die Schalteinrichtung (1) einen Druckstückhalter (DH) aufweist, welcher dazu eingerichtet ist ein federbelastetes Druckstück (D) abzustützen, mittels dem die Schiebemuffe (S) in zumindest einer axialen Stellung rastierbar ist.

11. Schalteinrichtung (1) nach Anspruch 10, **dadurch gekennzeichnet, dass** der Druckstückhalter (DH) an einer Innenseite der Fortsätze (F) zentriert ist.

12. Schalteinrichtung (1) nach Anspruch 11, **dadurch gekennzeichnet, dass** der Druckstückhalter (DH) mit der Schiebemuffe (S) drehfest verbunden ist.

13. Schalteinrichtung (1) nach Anspruch 10, **dadurch gekennzeichnet, dass** der Druckstückhalter (DH) am ersten oder zweiten Losrad (LR1, LR2) radial zentriert ist.

14. Schalteinrichtung (1) nach Anspruch 10, **dadurch gekennzeichnet, dass** der Druckstückhalter (DH) auf der Welle (W) zentriert ist.

15. Getriebe (G) für ein Kraftfahrzeug, **gekennzeichnet durch** eine Schalteinrichtung (S) nach einem der Ansprüche 1 bis 14.

## Claims

1. Shifting device (1) for a transmission (G), the shifting device (1) having a shaft (W), and a first and second idler gear (LR1, LR2) which are assigned to the shaft (W),
- the shifting device (1) being set up to establish a shiftable non-rotational connection between
- the shaft (W) and the first idler gear (LR1),
- and between the first idler gear (LR1) and the second idler gear (LR2) which is arranged coaxially with respect to the shaft (W),
- the shifting device (1) having a slider sleeve (S) which is arranged between the first and second idler gear (LR1, LR2),
- it being possible for the non-rotational connection between the shaft (W) and the first idler gear (LR1) to be established by way of displacement of the slider sleeve (S) in the direction of the first idler gear (LR1),
- it being possible for the non-rotational connection between the first idler gear (LR1) and the second idler gear (LR2) to be established by way of displacement of the slider sleeve (S) in the direction of the second idler gear (LR2),
**characterized in that** the first idler gear (LR1) has a plurality of axially protruding projections (F) which reach through openings (A) which are configured in the slider sleeve (S).

2. Shifting device (1) according to Claim 1, **characterized in that** the openings (A) are formed by way of through holes or by way of clearances.

3. Shifting device (1) according to Claim 1 or Claim 2, **characterized in that** the projections (F) have a circular cross section.

4. Shifting device (1) according to Claim 1 or Claim 2, **characterized in that** the projections (F) are formed by way of ring segments which protrude from the first idler gear (LR1).

5. Shifting device (1) according to one of the preceding claims, **characterized in that** the projections (F) and the first idler gear (LR1) are configured in one piece.

6. Shifting device (1) according to one of Claims 1 to 4, **characterized in that** the projections (F) are connected to the first idler gear (LR1) via a press joint or a welded connection.

7. Shifting device (1) according to one of the preceding claims, **characterized in that** the shifting device (1) has a neutral position, in which there is a non-rotational connection neither between the shaft (W) and the first idler gear (LR1) nor between the two idler gears (LR1, LR2).

8. Shifting device (1) according to one of Claims 1 to 7, **characterized in that** at least one of the idler gears (LR1, LR2) is assigned a synchronizing device (SY1, SY2).

9. Shifting device (1) according to one of Claims 1 to 7, **characterized in that** at least one of the shiftable non-rotational connections can be established via a dogged toothing system (K1, K2, KS).

10. Shifting device (1) according to one of the preceding claims, **characterized in that** the shifting device (1) has a pressure piece holder (DH) which is set up to support a spring-loaded pressure piece (D), by means of which the slider sleeve (S) can be latched in at least one axial position.

11. Shifting device (1) according to Claim 10, **characterized in that** the pressure piece holder (DH) is centred on an inner side of the projections (F).

12. Shifting device (1) according to Claim 11, **characterized in that** the pressure piece holder (DH) is connected fixedly to the slider sleeve (S) so as to rotate with it.

13. Shifting device (1) according to Claim 10, **characterized in that** the pressure piece holder (DH) is centred radially on the first or second idler gear (LR1, LR2) .

14. Shifting device (1) according to Claim 10, **characterized in that** the pressure piece holder (DH) is centred on the shaft (W).

15. Transmission (G) for a motor vehicle, **characterized by** a shifting device (S) according to one of Claims 1 to 14.

## Revendications

1. Dispositif de commutation (1) pour une boîte de vitesse (G), le dispositif de commutation (1) comprenant un arbre (W), ainsi qu'un premier et deuxième pignon fou (LR1, LR2) associés à l'arbre (W),
- le dispositif de commutation (1) étant conçu pour l'établissement d'une liaison commutable immobile en rotation entre
- l'arbre (W) et le premier pignon fou (LR1),
- ainsi qu'entre le premier pignon fou (LR1) et le deuxième pignon fou (LR2) agencé coaxialement à l'arbre (W),
- le dispositif de commutation (1) comprenant un manchon coulissant (S) agencé entre le premier et deuxième pignon fou (LR1, LR2),
- la liaison immobile en rotation entre l'arbre (W) et le premier pignon fou (LR1) pouvant être établie par coulissement du manchon coulissant (S) en direction du premier pignon fou (LR1),
- la liaison immobile en rotation entre le premier pignon fou (LR1) et le deuxième pignon fou (LR2) pouvant être établie par coulissement du manchon coulissant (S) en direction du deuxième pignon fou (LR2),
**caractérisé en ce que** le premier pignon fou (LR1) comprend une pluralité de prolongements dépassant axialement (F), qui passent au travers d'ouvertures (A) formées dans le manchon coulissant (S).

2. Dispositif de commutation (1) selon la revendication 1, **caractérisé en ce que** les ouvertures (A) sont formées par des trous de passage ou par des dégagements.

3. Dispositif de commutation (1) selon la revendication 1 ou la revendication 2, **caractérisé en ce que** les prolongements (F) présentent une section transversale circulaire.

4. Dispositif de commutation (1) selon la revendication 1 ou la revendication 2, **caractérisé en ce que** les prolongements (F) sont formés par des segments annulaires en saillie à partir du premier pignon fou (LR1).

5. Dispositif de commutation (1) selon l'une quelconque des revendications précédentes, **caractérisé en ce que** les prolongements (F) et le premier pignon fou (LR1) sont configurés d'un seul tenant.

6. Dispositif de commutation (1) selon l'une quelconque des revendications 1 à 4, **caractérisé en ce que** les prolongements (F) sont reliés avec le premier pignon fou (LR1) par l'intermédiaire d'une liaison par sertissage ou d'une liaison par soudure.

7. Dispositif de commutation (1) selon l'une quelconque des revendications précédentes, **caractérisé en ce que** le dispositif de commutation (1) présente une position neutre, dans laquelle une liaison immobile en rotation n'existe ni entre l'arbre (W) et le premier pignon fou (LR1), ni entre les deux pignons fous (LR1, LR2).

8. Dispositif de commutation (1) selon l'une quelconque des revendications 1 à 7, **caractérisé en ce qu'**un dispositif de synchronisation (SY1, SY2) est associé à au moins un des pignons fous (LR1, LR2).

9. Dispositif de commutation (1) selon l'une quelconque des revendications 1 à 7, **caractérisé en ce qu'**au moins une des liaisons commutables immobiles en rotation peut être établie par l'intermédiaire d'une denture de crabotage (K1, K2, KS).

10. Dispositif de commutation (1) selon l'une quelconque des revendications précédentes, **caractérisé en ce que** le dispositif de commutation (1) comprend un support d'élément de pression (DH), qui est conçu pour soutenir un élément de pression chargé par ressort (D), au moyen duquel le manchon coulissant (S) peut être enclenché dans au moins une position axiale.

11. Dispositif de commutation (1) selon la revendication 10, **caractérisé en ce que** le support d'élément de pression (DH) est centré sur un côté intérieur des prolongements (F).

12. Dispositif de commutation (1) selon la revendication 11, **caractérisé en ce que** le support d'élément de pression (DH) est relié de manière immobile en rotation avec le manchon coulissant (S).

13. Dispositif de commutation (1) selon la revendication 10, **caractérisé en ce que** le support d'élément de pression (DH) est centré radialement sur le premier ou deuxième pignon fou (LR1, LR2).

14. Dispositif de commutation (1) selon la revendication 10, **caractérisé en ce que** le support d'élément de pression (DH) est centré sur l'arbre (W).

15. Boîte de vitesses (G) pour un véhicule automobile, **caractérisée par** un dispositif de commutation (S) selon l'une quelconque des revendications 1 à 14.
